# DEMANDE DE BREVET EUROPEEN

(11) **EP 4 656 432 A1**
(43) Date de publication de la demande: **03.12.2025**
(21) Numéro de dépôt: 25176649.9
(22) Date de dépôt: 15.05.2025
(51) Int. Cl.: B60K 15/03

(54) **DISPOSITIF DE PROTECTION PARE-FEU POUR UN VÉHICULE AUTOMOBILE HYBRIDE**

(30) Priorité: 28.05.2024 FR 2405490
(71) Demandeur: Renault s.a.s, 92100 Boulogne Billancourt (FR)
(72) Inventeur: BEN-LAHCEN, Eric, 78280 GUYANCOURT (FR)

(57) **Abrégé**

Dispositif (10) de protection pare-feu pour un véhicule automobile hybride, le dispositif (10) de protection étant caractérisé en ce qu'il comprend d'une part une pièce de liaison (11) adaptée à être montée en position fixe sur un réservoir (4) de carburant destiné à alimenter un moteur thermique du véhicule automobile, ladite pièce de liaison (11) présentant une zone de réception (110) configurée pour recevoir une patte de fixation (40) du réservoir (4) de façon à pouvoir relier ensemble de manière rigide ledit réservoir (4) et ledit dispositif (10) de protection, et caractérisé en ce que le dispositif (10) de protection comprend d'autre part une structure de guidage (12) comprenant une portion de réception (121) configurée pour recevoir au moins un câble (2) destiné à être lié à une batterie électrique d'un véhicule automobile hybride.

## Description

L'invention concerne un dispositif de protection pare-feu pour un véhicule automobile hybride. L'invention concerne de plus un véhicule automobile hybride équipé d'un dispositif de protection pare-feu selon l'invention.

Les véhicules automobiles hybrides sont dotés de nouvelles fonctions et de nouveaux équipements qui n'existaient pas forcément sur les véhicules thermiques. Il en va notamment de la batterie, du câblage de prise de charge rapide en courant continu ainsi que le câble de prise de charge en courant alternatif.

Le câblage, dont la masse linéique est relativement importante, requiert l'aménagement de chemins de câble et des attaches spéciales régulièrement espacées les unes des autres afin de l'y maintenir.

Pour certains modèles de véhicules automobiles hybrides, un chemin de câbles s'étend autour d'un réservoir de carburant destiné à alimenter le moteur thermique dudit véhicule. Plus particulièrement, un ou plusieurs câbles de haute tension peuvent être aménagés à proximité du réservoir de carburant. Un moyen de guidage et/ou de maintien est alors nécessaire pour assurer le bon positionnement desdits câbles.

Par ailleurs, le réservoir de carburant doit être protégé par un dispositif de protection pare-feu. Ce dispositif de protection pare-feu a donc pour fonction de faire obstacle à la propagation du feu, ou du moins de ralentir ladite propagation vers le réservoir de carburant dans le cas d'un incendie, lors d'un accident de la route par exemple.

Le but de l'invention est de fournir un dispositif de protection pare-feu multifonction. En particulier, l'invention se propose de fournir un dispositif de protection qui permet simultanément d'assurer une fonction de protection pare-feu auprès du réservoir de carburant du véhicule automobile hybride et de servir de support à au moins un câble.

A cet effet, l'invention porte sur un dispositif de protection pare-feu pour un véhicule automobile hybride. Le dispositif de protection est caractérisé en ce qu'il comprend :
- d'une part une pièce de liaison adaptée à être montée en position fixe sur un réservoir de carburant destiné à alimenter un moteur thermique du véhicule automobile, ladite pièce de liaison présentant une zone de réception configurée pour recevoir une patte de fixation du réservoir de façon à pouvoir relier ensemble de manière rigide ledit réservoir et ledit dispositif de protection, et
- d'autre part une structure de guidage comprenant une portion de réception configurée pour recevoir au moins un câble destiné à être lié à une batterie électrique d'un véhicule automobile hybride.

La pièce de liaison et la structure de guidage peuvent coopérer entre elles de manière démontable à l'aide d'au moins une liaison glissière.

L'au moins une liaison glissière entre la pièce de liaison et la structure de guidage peuvent présenter un profil en queue d'aronde.

La structure de guidage peut comprendre une butée contre laquelle un bord libre de la pièce de liaison est destiné à venir en butée lorsque la pièce de liaison et la structure de guidage sont assemblées à l'aide de l'au moins une liaison glissière.

L'épaisseur de la pièce de liaison peut être comprise entre 1 mm et 2,5 mm, et en ce que l'épaisseur de la pièce de liaison peut être plus particulièrement égale à 1,5 mm.

La pièce de liaison peut présenter au moins un bord replié de sorte à former une zone de réception configuré pour y accueillir une patte de fixation d'un réservoir de carburant.

La pièce de liaison peut être obtenue lors d'un procédé de pliage.

La pièce de liaison peut être une pièce métallique et la structure de guidage peut être une pièce en plastique.

La pièce de liaison peut être une pièce métallique et la structure de guidage peut être également une pièce métallique.

L'invention porte encore sur un véhicule automobile hybride caractérisé en ce qu'il comprend :
- une batterie,
- au moins un câble lié à la batterie,
- un réservoir de carburant destiné à alimenter un moteur thermique, et
- un dispositif de protection pare-feu défini précédemment,
le dispositif de protection pare-feu étant monté sur le réservoir à l'aide de la pièce de liaison, et l'au moins un câble étant agencé au niveau d'une portion de réception de la structure de guidage des câbles du dispositif de protection pare-feu.

L'invention porte en outre sur un véhicule automobile hybride équipé d'un dispositif de protection pare-feu défini précédemment.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue partielle d'un agencement de composants pour un véhicule automobile hybride équipé d'un dispositif de protection pare-feu selon l'invention ;
La figure 2 est une vue de détail de la figure 1 ;
La figure 3 est une première vue en perspective cavalière du dispositif de protection pare-feu ;
La figure 4 est une deuxième en perspective cavalière du dispositif de protection pare-feu ;
La figure 5 est une représentation schématique d'une étape d'assemblage du dispositif de protection pare-feu.

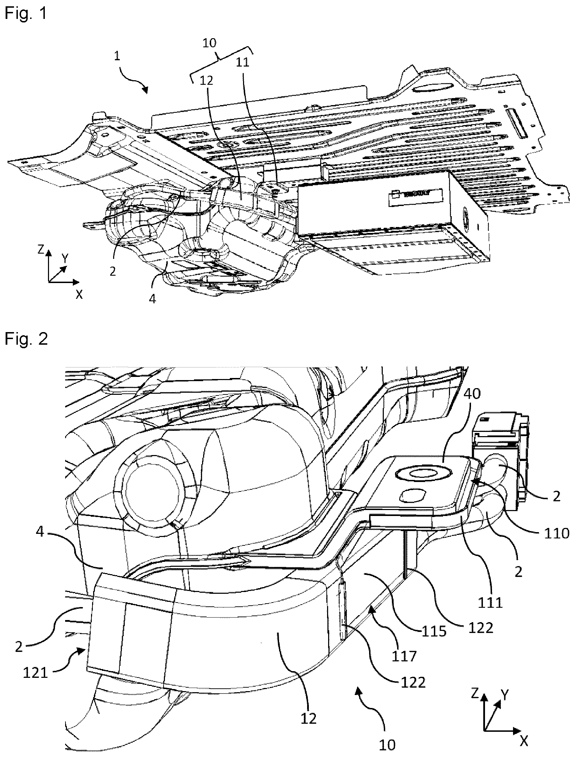

L'objet de la figure 1 s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite en situation de conduite ; et l'axe Z s'étend selon une direction verticale, orienté à l'opposé du sol.

La figure 1 montre ainsi une vue partielle d'un agencement 1 pour un véhicule automobile hybride. L'agencement 1 comprend une batterie, au moins un câble 2 lié à la batterie, un réservoir 4 de carburant destiné à alimenter un moteur thermique du véhicule automobile hybride et un dispositif de protection 10 pare-feu configuré pour protéger ledit réservoir 4, notamment en faisant obstacle à la propagation d'un feu dans le cas d'un incendie. Le dispositif 10 de protection pare-feu sert ainsi entre autres à ralentir une éventuelle propagation du feu vers le réservoir 4 de carburant, lors d'un accident de la route par exemple, afin de laisser le temps aux occupants du véhicule de quitter celui-ci pour se mettre en sécurité.

On se référera à présent à la figure 2 afin de décrire en détail le dispositif 10 de protection pare-feu qui est monté en position fixe sur le réservoir 4 de carburant. Ce dispositif 10 de protection pare-feu est un dispositif multifonctionnel, c'est-à-dire qu'il permet d'assurer simultanément plusieurs fonctions. En particulier, le dispositif 10 de protection pare-feu permet de faire obstacle à, ou du moins de ralentir, une éventuelle propagation d'un feu vers le réservoir 4 de carburant, remplissant ainsi une première fonction, mais ce dispositif 10 pare-feu permet également de supporter un ou plusieurs câbles 2 destinés à être lié à la batterie électrique du véhicule automobile hybride.

En effet, tel qu'illustré sur la figure 1 et sur la figure 2, un ou plusieurs câbles 2 cheminent autour du réservoir 4 de carburant, pour des raisons d'aménagement et/ou de compacité. Le dispositif 10 de protection pare-feu selon l'invention est alors configuré pour assurer une deuxième fonction : celle de maintenir le ou les câbles 2 et/ou de guider le ou les câbles 2 dans leur cheminement autour du réservoir 4 de carburant.

Afin d'assurer simultanément ces deux fonctions, le dispositif 10 de protection pare-feu comprend d'une part une pièce de liaison 11 configurée pour être montée en position fixe sur le réservoir 4 de carburant qui est lui-même destiné à alimenter un moteur thermique du véhicule automobile, et le dispositif 10 de protection pare-feu comprend d'autre part une structure de guidage 12 comprenant une portion de réception 121 configurée pour recevoir au moins un câble 2 destiné à être lié à la batterie électrique du véhicule automobile hybride.

La pièce de liaison 11 du dispositif 10 de protection présente une zone de réception 110 configurée pour recevoir une patte de fixation 40 du réservoir 4 de façon à pouvoir relier ensemble de manière rigide ledit réservoir 4 et ledit dispositif 10 de protection, ceci est plus particulièrement illustré sur la figure 2.

La structure de guidage 12 définit une portion de réception 121 de câbles 2 configurée pour guider et optionnellement protéger un faisceau de câbles 2 destinés à cheminer autour du réservoir 4 de carburant. Plus particulièrement, le faisceau de câbles 2 opère une courbure autour d'un coin du réservoir 4 tout en étant logé dans la portion de réception 121 de la structure de guidage 12, comme illustré sur la figure 2.

La structure de guidage 12 peut s'apparenter à une goulotte comportant une ou plusieurs portions droites et/ou une ou plusieurs portions courbées qui délimitent la portion de réception 121 de câbles 2, permettant de guider le faisceau de câble 2 selon un chemin adéquat autour du réservoir 4 de carburant.

Le faisceau de câbles 2 comprend par exemple une paire de câbles de prise de charge permettant l'alimentation de la batterie d'accumulateurs du véhicule en courant continu, notamment pour la charge rapide, et un câble de prise de charge en courant alternatif pour la charge standard.

Selon un mode de réalisation particulier qui n'est pas illustré sur les figures, la structure de guidage 12 peut être équipée d'au moins une attache configurée pour maintenir l'au moins un câble 2 dans la portion de réception 121 de câbles de la structure de guidage 12. L'au moins une attache peut notamment comprendre un lien flexible qui vient enserrer le faisceau de câbles 2 afin qu'il soit maintenu en position fixe dans la portion de réception 121 de la structure de guidage 12.

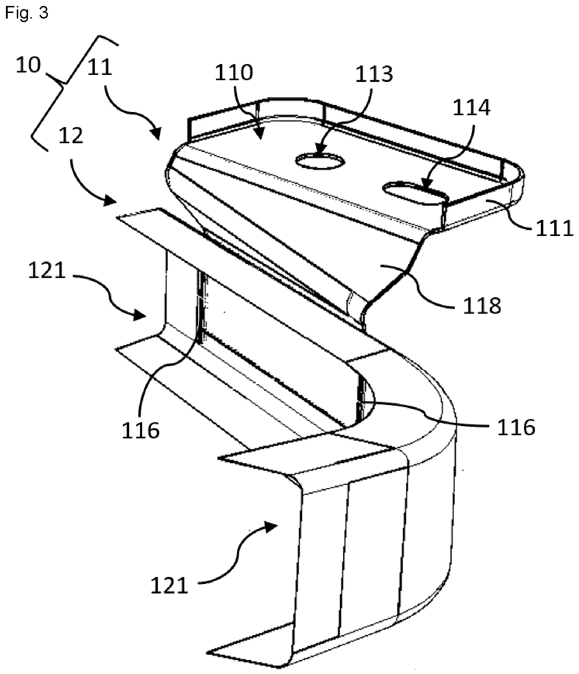

A titre d'exemple non limitatif, un mode de réalisation spécifique du dispositif 10 de protection est illustré en détail sur les figures 3 à 5, permettant de mieux visualiser la pièce de liaison 11 et la structure de guidage 12 dudit dispositif 10 de protection.

Selon un mode de réalisation préférentiel du dispositif 10 de protection pare-feu, la pièce de liaison 11 est une pièce métallique. Selon un mode de fabrication privilégié, la pièce de liaison 11 est obtenue lors d'un procédé de pliage. En plus d'être relativement économique, un tel procédé est généralement aisé à mettre en œuvre.

Selon un mode de réalisation préférentiel et optionnel du dispositif 10 de protection pare-feu, l'épaisseur de pièce de liaison 11 est comprise entre 1 mm et 2,5 mm. Selon un mode de réalisation particulier, l'épaisseur de pièce de liaison 11 est notamment égale à 1,5 mm. Une pièce de liaison 11 d'épaisseur fine a l'avantage d'être plus légère, tandis qu'une pièce de liaison 11 d'épaisseur plus importante présente l'avantage d'être plus robuste et de résister plus aisément à des potentielles vibrations qui peuvent apparaître lors de l'usage du véhicule automobile hybride équipé d'un tel dispositif 10 de protection pare-feu comprenant une telle pièce de liaison 11.

Telle qu'illustrée sur les figures 2 à 5, la pièce de liaison 11 présente au moins un bord replié 111 de sorte à délimiter la zone de réception 110 configurée pour y accueillir une patte de fixation 40 du réservoir 4 de carburant de façon à pouvoir relier ensemble, de manière rigide, ledit réservoir 4 et ledit dispositif 10 de protection pare-feu.

Le au moins un bord replié 111 de la pièce de liaison 11 peut comprendre des portions droites et des portions courbées. Tel qu'illustré sur les figures 2 à 5, le bord replié 111 de la pièce de liaison 11 comprend par exemple trois portions droites liées entre elles par deux portions courbées. Parmi ces trois portions droites du bord replié 111 figurent deux portions droites extrémales et une portion intermédiaire. Chaque portion extrémale du bord replié 111 est liée à une extrémité de la portion intermédiaire du bord replié 111 par une portion courbée. Les deux portions droites extrémales du bord replié 111 sont par exemple parallèles entre elles. La portion intermédiaire du bord replié s'étend alors perpendiculairement à ces deux portions droites extrémales.

La zone de réception 110 de la pièce de liaison 11 peut par ailleurs se présenter sous la forme d'une cuvette comprenant un fond plat 112 bordé par le bord replié 111. Le fond plat 112 de la pièce de liaison 11 peut alors être plaqué contre une face inférieure de la patte de fixation 40. Un tel fond plat participe à un design plus compact du dispositif 10 de protection pare-feu.

De manière préférentielle mais optionnelle, il existe une complémentarité de forme entre la patte de fixation 40 et la zone de réception 110 de la pièce de liaison 11 configuré pour y accueillir ladite patte de fixation 40. Autrement dit, la forme du bord replié 111 de la pièce de liaison 11 est adaptée de sorte à épouser les bords de la patte de fixation 40 du réservoir 4. Ceci permet d'assurer la mise en position et le maintien en position de la pièce de liaison 11 du dispositif 10 de protection pare-feu contre le réservoir 4 de carburant du véhicule automobile hybride.

Tel qu'illustré sur les figures 1 à 5, le fond plat 112 de la zone de réception 110 de la pièce de liaison 11 présente deux orifices. Un premier orifice de fixation 113 de forme circulaire est apte à recevoir un élément de fixation mécanique tel qu'une vis par exemple pour pouvoir fixer de manière démontable la pièce de liaison 11 à la patte de fixation 40 du réservoir 4 de carburant.

Un deuxième orifice 114 de forme oblongue permet le positionnement en usine de la pièce de liaison 11 sur la patte de fixation 40 du réservoir 4. Le deuxième orifice 114 peut être considérer comme un moyen de préhension. La forme oblongue du deuxième orifice de fixation 114 permet d'ajuster la position de la pièce de liaison 11 par rapport à la patte de fixation 40 du réservoir 4.

Le deuxième orifice de fixation 114 permet d'éviter un éventuel glissement et/ou une rotation de la patte de fixation 40 du réservoir 4 par rapport à la pièce de liaison 11. De la sorte, on vient maintenir en position fixe la patte de fixation 40 du réservoir 4 à l'intérieur de la zone de réception 110 de la pièce de liaison 11 du dispositif 10 de protection pare-feu. D'autres moyens de fixations entre la pièce de liaison 11 et le réservoir 4 de carburant peuvent être envisagés.

Selon un mode de réalisation préférentiel illustré sur les figures 1 à 5, la pièce de liaison 11 et la structure de guidage 12 du dispositif 10 de protection pare-feu coopèrent entre elles de manière démontable à l'aide d'au moins une liaison glissière. Cette liaison glissière permet un déplacement de la structure de guidage 12 par rapport à la pièce de liaison 11 selon un axe de mouvement qui est sensiblement parallèle à l'axe vertical Z. Grâce à cette liaison glissière, il est possible de régler la position de la structure de guidage 12 par rapport à la pièce de liaison 11 suivant cet axe de mouvement, notamment pour ajuster la position du au moins un câble 2 dans son cheminement autour du réservoir 4.

L'axe de mouvement de la liaison glissière n'est pas forcément parallèle à l'axe vertical Z. Autrement dit, d'autres directions peuvent être envisagées pour l'axe de mouvement de la liaison glissière démontable entre la pièce de liaison 11 et la structure de guidage 12 du dispositif 10 de protection pare-feu.

Une telle liaison glissière démontable au sein du dispositif 10 de protection pare-feu permet également de remplacer la pièce de liaison 11 ou la structure de guidage 12 indépendamment l'une de l'autre si nécessaire.

Dans le mode de réalisation illustré sur les figures 1 à 5, la structure de guidage 12 présente notamment deux languettes 122 repliées qui forment chacune un chemin rectiligne, tandis que la pièce de liaison 11 présente une paroi plane 115 de forme sensiblement rectangulaire. Deux bords 116 opposés de ladite paroi plane 115 de forme rectangulaire sont configurées pour être insérées dans les chemins rectilignes formés par les languettes 122 repliées de la structure de guidage 12.

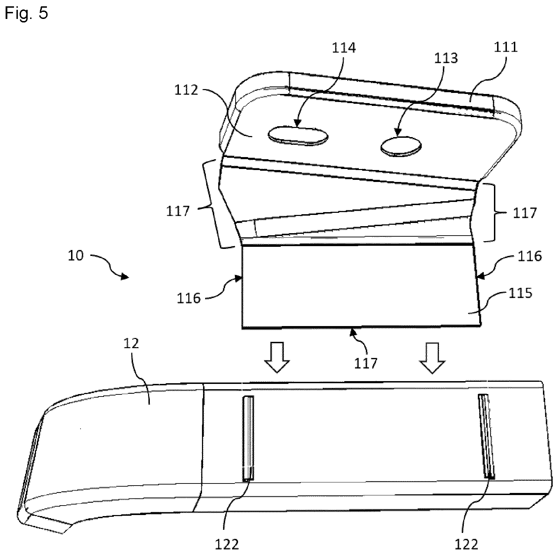

Lors de l'assemblage du dispositif 10 de protection pare-feu, illustré notamment sur la figure 5, la pièce de liaison 11 est approchée de la structure de guidage 12 de sorte que les bords 116 de la paroi plane 115 de la pièce de liaison 11 s'engagent dans les languettes 122 repliées de la structure de guidage 12 de façon à former la liaison glissière entre la pièce de liaison 11 et la structure de guidage 12.

Les bords 116 opposés de la paroi plane 115 de la pièce de liaison 11 et les languettes 122 repliées de la structure de guidage 12 présentent une complémentarité de forme pour former la liaison glissière entre la pièce de liaison 11 et la structure de guidage 12.

Ainsi, selon un mode de réalisation particulier, l'au moins une liaison glissière entre la pièce de liaison 11 et la structure de guidage 12 présente par exemple un profil en queue d'aronde. Un profil en queue d'aronde pour la liaison glissière entre la pièce de liaison 11 et la structure de guidage 12 assure d'une part une complémentarité de forme entre ces deux pièces de manière à sécuriser la liaison glissière ainsi formée. Bien qu'il s'agisse d'une configuration démontable, le profil en queue d'aronde pour cette liaison glissière empêche un démontage accidentel de cette liaison pendant l'utilisation du véhicule hybride équipé d'un tel dispositif 10 de protection pare-feu.

Optionnellement, la structure de guidage 12 peut comprendre une butée contre laquelle un bord libre 117 de la pièce de liaison 11 est destiné à venir en butée lorsque la pièce de liaison 11 et la structure de guidage 12 sont assemblées à l'aide de l'au moins une liaison glissière. La butée s'étend alors perpendiculairement à l'axe de mouvement de la liaison glissière entre la pièce de liaison 11 et la structure de guidage 12. Ce mode de réalisation n'est pas illustré sur les figures.

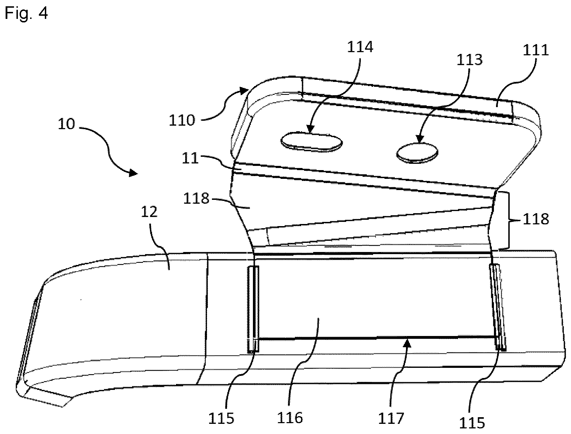

Telle qu'illustrée sur les figures 1 à 5, la pièce de liaison 11 peut présenter une zone de transition 118 entre le fond plat 112 de la zone de réception 110 et la paroi plane 115 de la pièce de liaison 11. La zone de transition 118 peut notamment comprendre plusieurs plis, visibles en particulier sur la figure 3, sur la figure 4 et sur la figure 5. Chaque pli peut définir une ligne de pliure qui permet une déformation de la pièce de liaison 11, ce qui rend apte le déplacement de la pièce de liaison 11 par rapport à la structure de guidage 12 en cas de choc notamment.

Selon un mode de réalisation particulier du dispositif 10 de protection pare-feu, la pièce de liaison 11 est une pièce métallique et la structure de guidage 12 est une pièce en plastique. Dans ce mode de réalisation, la pièce de liaison 11 et la structure de guidage 12 sont alors obtenus avec deux procédés de fabrication différents, puis assemblés pour former le dispositif 10 de protection pare-feu, comme illustré notamment sur la figure 5. La différence de matériaux entre la pièce de liaison 11 et la structure de guidage 12 peut permettre de faciliter l'assemblage de ces deux éléments. En particulier, cela peut faciliter l'insertion des bords 116 de la paroi plane 115 de la pièce de liaison 11 métallique dans les chemins formés par les languettes 122 repliées de la structure de guidage 12.

Selon un mode de réalisation alternatif du dispositif 10 de protection pare-feu, la pièce de liaison 11 est une pièce métallique et la structure de guidage 12 est également une pièce métallique. Dans ce mode de réalisation alternatif, la pièce de liaison 11 et la structure de guidage 12 peuvent être solidarisées à demeure par une soudure, telle qu'une soudure par point, ou avec un cordon de soudure. Ce mode de réalisation présente l'avantage d'être plus résistant aux potentielles vibrations qui peuvent se manifester lors de l'utilisation du véhicule automobile équipé d'un tel dispositif 10 de protection pare-feu. Ce mode de réalisation alternatif du dispositif 10 de protection pare-feu n'est pas illustré sur les figures.

De manière commune à l'ensemble des modes de réalisation, le dispositif 10 de protection remplit sa fonction de pare-feu auprès du réservoir 4 de carburant auquel il est fixé par l'intermédiaire de la pièce de liaison 11 tout en guidant le faisceau de câbles 2 dans son cheminement autour du réservoir 4 à l'aide de la structure de guidage 12. Le dispositif 10 de protection est ainsi un dispositif multifonctionnel qui assure simultanément différentes fonctions au sein d'un agencement de composants pour un véhicule automobile hybride.

## Revendications

1. Dispositif (10) de protection pare-feu pour un véhicule automobile hybride, le dispositif (10) de protection étant **caractérisé en ce qu'**il comprend d'une part une pièce de liaison (11) adaptée à être montée en position fixe sur un réservoir (4) de carburant destiné à alimenter un moteur thermique du véhicule automobile, ladite pièce de liaison (11) présentant une zone de réception (110) configurée pour recevoir une patte de fixation (40) du réservoir (4) de façon à pouvoir relier ensemble de manière rigide ledit réservoir (4) et ledit dispositif (10) de protection, et **caractérisé en ce que** le dispositif (10) de protection comprend d'autre part une structure de guidage (12) comprenant une portion de réception (121) configurée pour recevoir au moins un câble (2) destiné à être lié à une batterie électrique d'un véhicule automobile hybride.

2. Dispositif (10) de protection pare-feu selon la revendication précédente, **caractérisé en ce que** la pièce de liaison (11) et la structure de guidage (12) coopèrent entre elles de manière démontable à l'aide d'au moins une liaison glissière.

3. Dispositif (10) de protection pare-feu selon la revendication précédente, **caractérisé en ce que** l'au moins une liaison glissière entre la pièce de liaison (11) et la structure de guidage (12) présente un profil en queue d'aronde.

4. Dispositif (10) de protection pare-feu selon l'une des revendications 2 ou 3, **caractérisé en ce que** la structure de guidage (12) comprend une butée contre laquelle un bord libre (117) de la pièce de liaison (11) est destiné à venir en butée lorsque la pièce de liaison (11) et la structure de guidage (12) sont assemblées à l'aide de l'au moins une liaison glissière.

5. Dispositif (10) de protection pare-feu selon l'une des revendications précédentes, **caractérisé en ce que** l'épaisseur de la pièce de liaison (11) est comprise entre 1 mm et 2,5 mm, et **en ce que** l'épaisseur de la pièce de liaison (11) est plus particulièrement égale à 1,5 mm.

6. Dispositif (10) de protection pare-feu selon l'une des revendications précédentes, **caractérisé en ce que** la pièce de liaison (11) présente au moins un bord replié (111) de sorte à former une zone de réception (110) configuré pour y accueillir une patte de fixation (40) d'un réservoir (4) de carburant.

7. Dispositif (10) de protection pare-feu selon l'une des revendications précédentes, **caractérisé en ce que** la pièce de liaison (11) est obtenue lors d'un procédé de pliage.

8. Dispositif (10) de protection pare-feu selon l'une des revendications précédentes, **caractérisé en ce que** la pièce de liaison (11) est une pièce métallique et **en ce que** la structure de guidage (12) est une pièce en plastique.

9. Dispositif (10) de protection pare-feu selon l'une des revendications 1 à 7, **caractérisé en ce que** la pièce de liaison (11) est une pièce métallique et **en ce que** la structure de guidage (12) est également une pièce métallique.

10. Véhicule automobile hybride, **caractérisé en ce qu'**il comporte une batterie, au moins un câble (2) lié à la batterie, un réservoir (4) de carburant destiné à alimenter un moteur thermique et un dispositif (10) de protection pare-feu selon l'une des revendications précédentes, le dispositif (10) de protection pare-feu étant monté sur le réservoir (4) à l'aide de la pièce de liaison (11), et l'au moins un câble (2) étant agencé au niveau d'une portion de réception (121) de la structure de guidage (12) des câbles (2) du dispositif (10) de protection pare-feu.
